(19) Europäisches Patentamt

European Patent Office

Office européen des brevets

(11) Veröffentlichungsnummer: **0 189 552**
**B1**

(12) # EUROPÄISCHE PATENTSCHRIFT

(45) Veröffentlichungstag der Patentschrift:
**31.01.90**

(21) Anmeldenummer: **85115184.5**

(22) Anmeldetag: **29.11.85**

(51) Int. Cl.⁴: **A 01 J 5/10**

(54) **Pulsator für Melkmaschinen.**

(30) Priorität: **31.01.85 DE 3503245**

(43) Veröffentlichungstag der Anmeldung:
**06.08.86 Patentblatt 86/32**

(45) Bekanntmachung des Hinweises auf die Patenterteilung:
**31.01.90 Patentblatt 90/5**

(84) Benannte Vertragsstaaten:
**AT BE CH FR GB IT LI NL SE**

(56) Entgegenhaltungen:
**EP-A- 0 009 282**
**EP-A- 0 032 752**
**DE-A- 1 750 003**
**DE-A- 2 931 265**
**US-A- 2 822 823**

(73) Patentinhaber: **Westfalia Separator AG,
Werner-Habig-Strasse 1 Postfach 3720,
D-4740 Oelde 1 (DE)**

(72) Erfinder: **Icking, Friedrich, Dipl.-Ing.,
Paul-Keller-Strasse 1, D-4740 Oelde 1 (DE)**
Erfinder: **Willach, Eberhard, Dipl.-Ing., Neuenkirchener
Strasse 64, D-4830 Gütersloh 1 (DE)**

## Beschreibung

Die Erfindung bezieht sich auf einen Pulsator für Melkmaschinen mit zwei durch eine Stange miteinander verbundenen Membranen, die jeweils eine Druckdose in einen Arbeitsraum und einen Dämpfungsraum unterteilen, von denen die Dämpfungsräume über einen mit der Drosselstelle versehenen Verbindungskanal miteinander verbunden sind, während die Arbeitsräume wechselweise mit einer Unterdruckquelle bzw. der Atmosphäre verbindbar sind, und mit einer mit der Stange verbundenen Umsteuervorrichtung zum wechselweisen Verbinden von zu den Pulsräumen von Melkbechern führenden Leitungen mit der Atmosphäre oder einer zu der Unterdruckquelle führenden, mit einer Drosselstelle versehenen Hauptleitung, wobei die Drosselstellen im Verbindungskanal und in der Hauptleitung durch Bypassleitungen überbrückt sind, die mit Absperrorganen versehen sind, die über Steuerkanäle mittels Unterdruck betätigbar sind.

Ein derartiger Pulsator ist beispielsweise bekannt aus der EP-A 0032752 und dient dazu, während einer dem eigentlichen Melkvorgang vorgeschalteten Stimulationsphase die Pulsräume der Melkbecher mit einer wesentlich erhöhten Pulsatortaktzahl bei gleichzeitiger Erniedrigung der in den Pulsräumen wirksam werdenden Druckdifferenzen zu beaufschlagen. Die gewünschte Zeitdauer der Stimulationsphase wird dabei an einer Zeituhr eingestellt, nach deren Ablauf die Betätigung der in den Steuerleitungen angeordneten Absperrorganen erfolgt. Als Absperrorgane werden Quetschvorrichtungen benutzt, die die zumindest teilweise als elastische Schläuche ausgeführten Steuerkanäle zusammendrücken und damit verschließen. Derartige Schläuche, die mechanisch beansprucht werden, können jedoch sehr leicht beschädigt werden und führen dann zum Ausfall des Pulsators.

Auch die Zeituhr als Steuerelement ist mit ihrer notwendigerweise vorhandenen Feinmechanik empfindlich gegenüber den in Melkräumen üblicherweise herrschenden Bedingungen und kann daher zu Störungen führen.

Der Erfindung liegt die Aufgabe zugrunde, den bekannten Pulsator so zu verbessern, daß auf anfällige Schläuche und Zeituhren verzichtet werden kann und die Dauer der Stimulationsphase zeitunabhängig eingestellt werden kann.

Diese Aufgabe wird dadurch gelöst, daß die Steuerkanäle mit jeweils einer der Steuerkammern einer Steuerscheibe in Verbindung stehen, von denen eine Steuerkammer dauernd mit der Unterdruckquelle verbunden ist und die übrigen Steuerkammern unter atmosphärischem Druck stehen, wobei die Steuerscheibe über ein Getriebe, das von der sich hin- und herbewegenden Stange angetrieben wird, rotierbar ist und dadurch die Steuerkanäle abwechselnd mit der unter Unterdruck stehenden Steuerkammer oder einer der unter atmosphärischem Druck stehenden Steuerkammern verbunden sind. Die Länge der Stimulationsphase wird dabei bestimmt von der Pulsatortaktzahl und den damit verbundenen Richtungswechseln der mit den Membranen verbundenen Stange, sowie von der Übersetzung des von der Stange angetriebenen Getriebes und der Ausbildung der vom Getriebe rotierbaren Steuerscheibe.

In einer bevorzugten Ausführungsform ist das Getriebe mit einer um einen Drehpunkt schwenkbaren Antriebsgabel versehen, die mit einem an der Stange befestigten Mitnehmer in Verbindung steht und in ihrem Drehpunkt über eine plane, nur in einer Drehrichtung formschlüssige Verzahnung mit einer Antriebsscheibe verbunden ist, die über einen an ihr exzentrisch angeordneten Mitnehmer mit einer Steuergabel in Verbindung steht, die in ihrem Drehpunkt über eine plane, nur in einer Drehrichtung formschlüssige Verzahnung mit der Steuerscheibe verbunden ist, wobei die Verzahnung der Steuerscheibe an mindestens einer Stelle durch eine Zahnlücke unterbrochen ist und die Steuergabel mindestens einen Zahn besitzt.

Die pendelnde Bewegung der Antriebsgabel wird dabei über die Verzahnung als Drehbewegung nur in einer Richtung auf die Antriebsscheibe übertragen, die sich bei jedem vollständigen Pulsatortakt um eine Zahnteilung weiterbewegt. Eine volle Umdrehung der Antriebsscheibe bewirkt dabei auf gleiche Weise die Drehung der Steuerscheibe um eine Zahnteilung. Sobald jedoch der Zahn der Steuergabel in die Zahnlücke der Steuerscheibe greift, wird die Steuerscheibe trotz fortlaufender Schwingbewegung der Steuergabel nicht mehr weiterbewegt.

Eine Drehung der Antriebsscheibe durch Reibkräfte in der Verzahnung beim Rückenschwingen der Steuergabel gegen den gewünschten Drehsinn kann beispielsweise dadurch verhindert werden, daß die Antriebsscheibe auf ihrer nichtverzahnten Seite mit einem Ringkanal versehen ist und mit dieser Seite auf einer im Pulsator vorgesehenen Planfläche angeordnet ist und in der Planfläche ein Kanal vorgesehen ist, der mit der Unterdruckquelle in Verbindung steht und in den Ringkanal mündet. Durch den Unterdruck wird die Antriebsscheibe gegen die Planfläche gepreßt und die dadurch erzeugte Reibung verhindert ein Zurückdrehen der Antriebsscheibe.

Die Verbindung der Steuerkanäle mit den Steuerkammern der Steuerscheibe läßt sich einfach und effektiv dadurch herstellen, daß die Steuerkammern auf der nichtverzahnten Seite der Steuerscheibe vorgesehen sind, die Steuerscheibe mit einer Seite auf der Planfläche angeordnet ist, in der die Steuerkanäle und ein zur Unterdruckquelle führender Kanal so angeordnet sind, daß eine Steuerkammer dauernd mit der Unterdruckquelle verbunden ist und die Steuerkanäle je nach Stellung der Steuerscheibe mit dieser Steuerkammer oder einer der anderen Steuerkammern verbunden sind. Die Verbindung ist spielfrei, verschleißarm und selbstnachstellend und verhindert gleichzeitig ein Zurückdrehen der Steuerscheibe durch die schwingende Steuergabel aufgrund des anliegenden Unterdruckes.

Eine sichere Mitnahme von Antriebsscheibe und Steuerscheibe über die Verzahnung in der gewünschten Drehrichtung kann dadurch erzielt werden, daß die Antriebsgabel und die Steuergabel jeweils durch Federn gegen die Antriebsscheibe bzw. Steuerscheibe gepreßt werden.

Da der Zahn der Steuergabel nach Beendigung des Melkvorganges in der Zahnlücke der Steuerscheibe steht, muß zur Durchführung einer erneuten Stimulation die Steuerscheibe um eine Zahnteilung in Drehrichtung weiterbewegt werden. Dies kann dadurch ermöglicht werden, daß an der Steuerscheibe ein Starthebel vorgesehen ist, der über eine nur in einer Drehrichtung formschlüssige Verzahnung mit der Steuerscheibe verbunden ist, wobei der Starthebel durch ein federndes Element in einer Ausgangsposition gehalten wird und ein Anschlag den Betätigungsweg des Starthebels begrenzt.

Ein Ausführungsbeispiel der Erfindung ist in der Zeichnung dargestellt und wird nachstehend näher erläutert. Es zeigt:

Fig. 1 schematisch den Aufbau des Pulsators

Fig. 2 einen Querschnitt A-A durch das Getriebe gemäß Fig. 1

Fig. 3 eine Ansicht der Verzahnung der Steuerscheibe

Fig. 4 eine Ansicht der Verzahnung der Steuergabel

Fig. 5 die Verzahnung von Steuerscheibe und Starthebel in der Seitenansicht

Fig. 6 eine Ansicht der Steuerräume der Steuerscheibe in der Stellung «Stimulation» (Schnitt B-B)

Fig. 7 Die Stellung der Steuerscheibe gemäß Fig. 6 beim Milchentzug (Schnitt B-B).

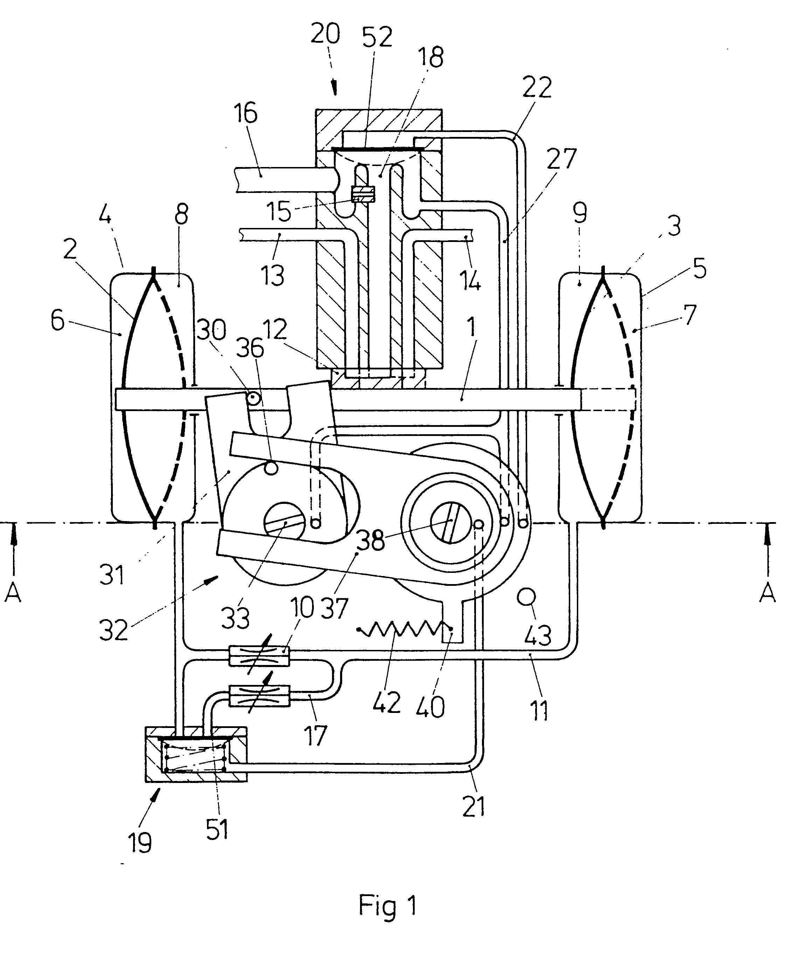

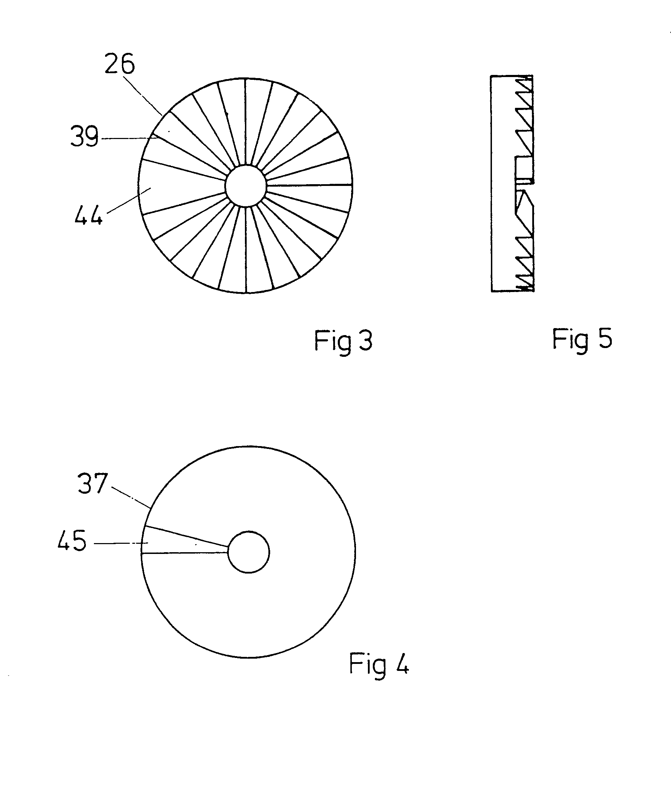

In der Fig. 1 ist mit 1 die Stange bezeichnet, die mit den beiden Membranen 2, 3 in den Druckdosen 4, 5 verbunden ist. Die Druckdosen 4, 5 werden durch die Membranen 2, 3 in je einen Arbeitsraum 6, 7 und je einen Dämpfungsraum 8, 9 unterteilt. Die Arbeitsräume 6, 7 werden durch eine nicht dargestellte Steuervorrichtung abwechselnd mit Unterdruck beaufschlagt. Die Dämpfungsräume stehen über einen mit einer Drosselstelle 10 versehenen Verbindungskanal 11 miteinander in Verbindung. An der Stange 1 ist eine Umsteuervorrichtung 12 vorgesehen, die die zu den Pulsräumen von Melkbechern führenden Leitungen 13, 14 mit der Atmosphäre oder einer zu der Unterdruckquelle führenden, mit einer Drosselstelle 15 versehenen Hauptleitung 16 verbindet. Sowohl die Drosselstelle 10 als auch die Drosselstelle 15 sind durch Bypassleitungen 17, 18 überbrückt, in denen Absperrorgane 19, 20 vorgesehen sind, die über Steuerkanäle 21, 22 mittels Unterdruck betätigbar sind. Die Steuerkanäle 21, 22 stehen jeweils mit einer der Steuerkammern 23, 24, 25 der Steuerscheibe 26 in Verbindung, von denen die Steuerkammer 23 dauernd über einen Kanal 27 mit der Unterdruckquelle verbunden ist, während die übrigen Steuerkammern 24, 25 über Kanäle 28, 29 mit der Atmosphäre verbunden sind. An der Stange 1 ist ein Mitnehmer 30 vorgesehen, der mit der Antriebsgabel 31 eines Getriebes 32 in Verbindung steht. Die Antriebsgabel 31 ist in ihrem Drehpunkt 33 über eine aus den Fig. 2 bis 5 ersichtliche Verzahnung 34 mit der Antriebsscheibe 35 verbunden. Ein an der Antriebsscheibe 35 exzentrisch angeordneter Mitnehmer 36 steht mit der Steuergabel 37 in Verbindung, die in ihrem Drehpunkt 38 über eine Verzahnung 39 mit der Steuerscheibe 26 verbunden ist. Die Steuergabel 37 ist in ihrem Drehpunkt 38 von einem Starthebel 40 umgeben, der über die Verzahnung 41 mit der Steuerscheibe 26 verbunden ist. Der Starthebel 40 wird durch ein federndes Element 42 in einer Ausgangsposition gehalten und sein Betätigungsweg wird durch einen Anschlag 43 begrenzt. Die Verzahnung 39 der Steuerscheibe 26 ist an einer Stelle durch eine Zahnlücke 44 unterbrochen und die Steuergabel 37 ist nur mit einem Zahn 45 versehen. Die Antriebsscheibe 35 ist an ihrer unverzahnten Seite mit einem Ringkanal 46 versehen, der über einen in der Planfläche 47 vorgesehenen Kanal 48 dauernd mit der Unterdruckquelle verbunden ist. Die Antriebsgabel 31 und die Steuergabel 37 werden durch Federn 49, 50 gegen die Verzahnungen 34, 39 gedrückt.

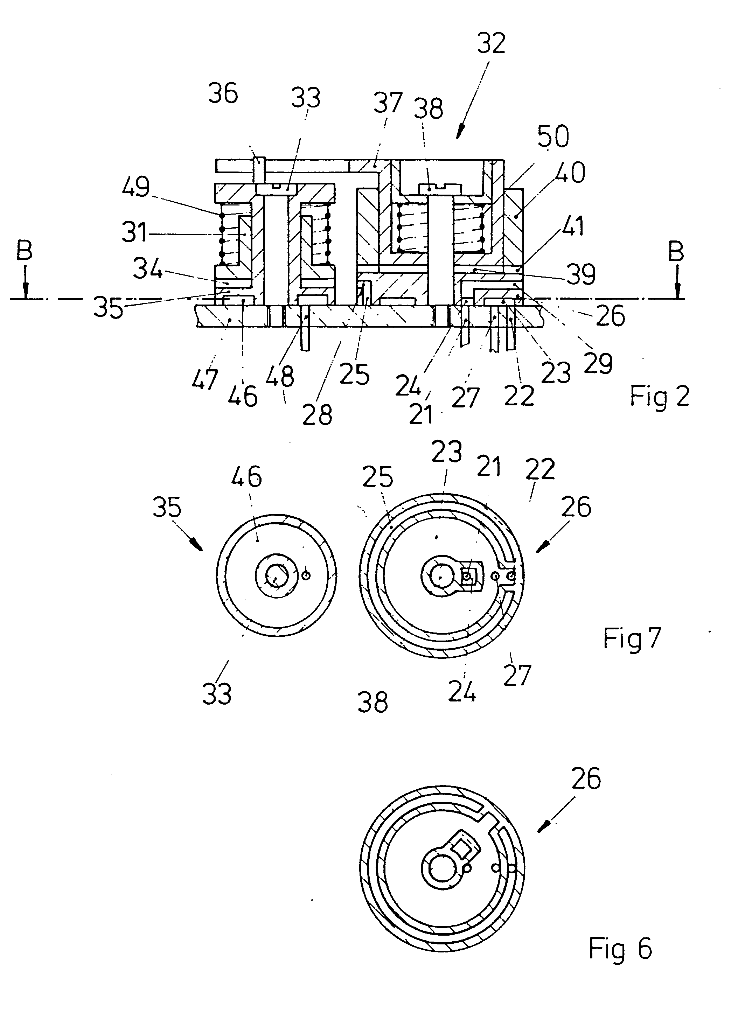

Die Position der Steuerräume 23, 24, 25 der Steuerscheibe 26, bezogen auf die Steuerkanäle 21, 22, zeigt Fig. 6 in der Stimulationsphase und Fig. 7 in der Melkphase.

Vor dem Anrüsten des Melkzeuges befindet sich der Zahn 45 der Steuergabel 37 in der Zahnlücke 44 der Steuerscheibe 26, die jetzt trotz der Schwingbewegung der Steuergabel 37 nicht weitergedreht wird. In dieser Stellung ist gemäß Fig. 7 der Kanal 21 mit der Steuerkammer 24 und der Kanal 22 mit der Steuerkammer 23 verbunden. Die Absperrvorrichtung 19 in der Bypassleitung 17 ist dadurch belüftet und verschließt die Bypassleitung 17 mittels einer federbelastenden Membran 51, wodurch die Dämpfungskammern 8, 9 nur über die Drosselstelle 10 miteinander verbunden sind, die einen großen Widerstand darstellt. Der Pulsator arbeitet jetzt mit einer für den Melkvorgang üblichen Taktzahl. Die Membran 52 im Absperrorgan 20 in der Bypassleitung 18 steht beidseitig unter Unterdruck und das Absperrorgan 20 ist dadurch geöffnet. In den zu den Pulsräumen der Melkbecher führenden Leitungen 13, 14 kann sich damit der volle Unterdruck aufbauen. Zur Auslösung der Stimulationsphase muß der Starthebel 40 bis zum Anschlag 43 bewegt werden, wodurch die Steuerscheibe 26 um eine Zahnteilung in ihre Drehrichtung weiterbewegt wird und der Zahn 45 der Steuergabel mit der Verzahnung 39 zum Eingriff kommt. Die Steuerscheibe 26 hat jetzt die in Fig. 6 gezeigte Stellung, wodurch über Steuerkanal 21 die Membran 51 des Absperrorgans 19 mit Unterdruck beaufschlagt wird und dadurch öffnet, während über Steuerkanal 22 die Membran 52 des Absperrorgans 20 einseitig belüftet ist und dadurch schließt. Jetzt stehen die beiden Dämpfungskammern 8, 9 über einen großen Querschnitt miteinander in Verbindung, was zu einer Vervielfachung der Taktzahl führt, während die Versorgung der Leitungen 13, 14 mit Unterdruck nur noch über die Drosselstelle 15 erfolgt, so daß sich in den Pulsräumen der Melkbecher nur ein verringerter Unterdruck aufbauen kann. Mit jeder Hin- und Herbewegung der Stange 1 wird auch die Antriebsgabel 31 über den Mitnehmer 30 um den Drehpunkt 33 in beide Drehrichtungen ausgelenkt. Über die nur in einer Drehrichtung formschlüssige Verzahnung 34 gibt sie ihre Bewegung nur in eine Drehrichtung weiter, während sie in der Gegenrichtung um eine Zahnteilung gegenüber der Antriebsscheibe 35 versetzt wird. Bei einer vollen Umdrehung der Antriebsscheibe 35 führt auch die Steuergabel über den Mitnehmer 36 eine volle Schwingbewegung aus und überträgt diese in gleicher Weise wie die Antriebsgabel 31 auf die Steuerscheibe 26. Die Drehbewegung der Steuerscheibe 26 wird beendet, sobald sie eine volle Umdrehung durchgeführt hat und sich der Zahn 45 der Steuergabel 37 wieder in der Zahnlücke 44 der Steuerscheibe 26 befindet und damit wieder in der oben beschriebenen Ausgangsposition. Die Dauer der Stimulationsphase ist abhängig von der Pulsatortaktzahl während der Stimulationsphase und von der gewählten Getriebeübersetzung. Die Pulsatortaktzahl kann durch die Wahl des Querschnitts der Bypassleitung 17 bestimmt werden. Beträgt die Pulsatortaktzahl während der Stimulationsphase beispielsweise 300 min$^{-1}$ und die Getriebeübersetzung 1:300, so dauert die Stimulationsphase 60 Sekunden.

Bezugszeichenliste

| | |
|---|---|
| 1 Stange | 27 Kanal |
| 2 Membran | 28 Kanal |
| 3 Membran | 29 Kanal |
| 4 Druckdose | 30 Mitnehmer |
| 5 Druckdose | 31 Antriebsgabel |
| 6 Arbeitsraum | 32 Getriebe |
| 7 Arbeitsraum | 33 Drehpunkt |
| 8 Dämpfungsraum | 34 Verzahnung |
| 9 Dämpfungsraum | 35 Antriebsscheibe |
| 10 Drosselstelle | 36 Mitnehmer |
| 11 Verbindungskanal | 37 Steuergabel |
| 12 Umsteuervorrichtung | 38 Drehpunkt |
| 13 Leitung | 39 Verzahnung |
| 14 Leitung | 40 Starthebel |
| 15 Drosslstelle | 41 Verzahnung |
| 16 Hauptleitung | 42 Federndes Element |
| 17 Bypassleitung | 43 Anschlag |
| 18 Bypassleitung | 44 Zahnlücke |
| 19 Absperrorgan | 45 Zahn |
| 20 Absperrorgan | 46 Ringkanal |
| 21 Steuerkanal | 47 Planfläche |
| 22 Steuerkanal | 48 Kanal |
| 23 Steuerkammer | 49 Feder |
| 24 Steuerkammer | 50 Feder |
| 25 Steuerkammer | 51 Membran |
| 26 Steuerscheibe | 52 Membran |

**Patentansprüche**

1. Pulsator für Melkmaschinen mit zwei durch eine Stange (1) miteinander verbundenen Membranen (2, 3), die jeweils eine Druckdose (4, 5) in einen Arbeitsraum (6, 7) und einen Dämpfungsraum (8, 9) unterteilen, von denen die Dämpfungsräume (8, 9) über einen mit einer Drosselstelle (10) versehenen Verbindungskanal (11) miteinander verbunden sind, während die Arbeitsräume (6, 7) wechselweise mit einer Unterdruckquelle bzw. der Atmosphäre verbindbar sind, und mit einer mit der Stange (1) verbundenen Umsteuervorrichtung (12) zum wechselweisen Verbinden von zu den Pulsräumen von Melkbechern führenden Leitungen (13, 14) mit der Atmosphäre oder einer zu der Unterdruckquelle führenden, mit einer Drosselstelle (15) versehenen Hauptleitung (16), wobei die Drosselstellen (10, 15) im Verbindungskanal (11) und in der Hauptleitung (16) durch Bypassleitungen (17, 18) überbrückt sind, die mit Absperrorganen (19, 20) versehen sind, die über Steuerkanäle (21, 22) mittels Unterdruck betätigbar sind, dadurch gekennzeichnet, daß die Steuerkanäle (21, 22) mit jeweils einer der Steuerkammern 23, 24, 25 einer Steuerscheibe (26) in Verbindung stehen, von denen eine Steuerkammer (23) dauernd mit der Unterdruckquelle verbunden ist und die übrigen Steuerkammern (24, 25) unter atmosphärischem Druck stehen, wobei die Steuerscheibe (26) über ein Getriebe (32), das von der sich hin- und herbewegenden Stange (1) angetrieben wird, rotierbar ist und dadurch die Steuerkanäle (21, 22) abwechselnd mit der unter Unterdruck stehenden Steuerkammer (23) oder einer der unter atmosphärischem Druck stehenden Steuerkammern (24, 25) verbunden sind.

2. Pulsator nach Anspruch 1, dadurch gekennzeichnet, daß das Getriebe (32) mit einer um einen Drehpunkt (33) schwenkbaren Antriebsgabel (31) versehen ist, die mit einem an der Stange (1) befestigten Mitnehmer (30) in Verbindung steht und in ihrem Drehpunkt (33) über eine plane, nur in einer Drehrichtung formschlüssige Verzahnung (34) mit einer Antriebsscheibe (35) verbunden ist, die über einen an ihr exzentrisch angeordneten Mitnehmer (36) mit einer Steuergabel (37) in Verbindung steht, die in ihrem Drehpunkt (38) über eine plane, nur in einer Drehrichtung formschlüssige Verzahnung (39) mit der Steuerscheibe (26) verbunden ist, wobei die Verzahnung der Steuerscheibe (26) an mindestens einer Stelle durch eine Zahnlücke (44) unterbrochen ist und die Steuergabel (37) mindestens einen Zahn (45) besitzt.

3. Pulsator nach Anspruch 1 und 2, dadurch gekennzeichnet, daß die Antriebsscheibe (35) auf ihrer nichtverzahnten Seite mit einem Ringkanal (46) versehen ist und mit dieser Seite auf einer im Pulsator vorgesehenen Planfläche (47) angeordnet ist und in der Planfläche (47) ein Kanal (48) vorgesehen ist, der mit der Unterdruckquelle in Verbindung steht und in den Ringkanal (46) mündet.

4. Pulsator nach einem der Ansprüche 1 bis 3, dadurch gekennzeichnet, daß die Steuerkammern (23, 24, 25) auf der nichtverzahnten Seite der Steuerscheibe (26) vorgesehen sind, die Steuerscheibe (26) mit dieser Seite auf der Planfläche (47) angeordnet ist, in der die Steuerkanäle (21, 22) und ein zur Unterdruckquelle führender Kanal (27) so angeordnet sind, daß eine Steuerkammer (23) dauernd mit der Unterdruckquelle verbunden ist und die Steuerkanäle (21, 22) je nach Stellung der Steuerscheibe (26) mit dieser Steuerkammer (23) oder einer der anderen Steuerkammern (24, 25) verbunden sind.

5. Pulsator nach einem der Ansprüche 2 bis 4, dadurch gekennzeichnet, daß die Antriebsgabel (31) und die Steuergabel (37) jeweils durch Federn (49, 50) gegen die Antriebsscheibe (35) bzw. Steuerscheibe (26) gepreßt werden.

6. Pulsator nach einem der Ansprüche 1 bis 5, dadurch gekennzeichnet, daß an der Steuerscheibe (26) ein Starthebel (40) vorgesehen ist, der über eine nur in einer Drehrichtung formschlüssige Verzahnung (41) mit der Steuerscheibe (26) verbunden ist, wobei der Starthebel (40) durch ein federndes Element (42) in einer Ausgangsposition gehalten wird und ein Anschlag (43) den Betätigungsweg des Starthebels(40) begrenzt.

**Claims**

1. Pulsator for milking machines with two diaphragms (2, 3) connected to each other via a rod (1), said diaphragms each partitioning a pressure chamber (4, 5) into a working chamber (6, 7) and a damping chamber (8, 9), of which said damping chambers (8, 9) are interconnected via a connecting duct (11) equipped with a restrictor device (10), whereas said working chambers (6,7) are alternately connectible to a vacuum source or the atmosphere and, additionally, to a change-over device (12) linked to said rod (1) for the purpose of alternate connection of lines (13, 14) leading to the pulsation chambers of teat cups with the atmosphere or a main line (16) provided with a restrictor device (15) leading to the vacuum source, whereby said restrictor devices (10, 15) in said connecting duct (11) and main line (16) are bridged by bypass lines (17, 18), the bypass lines being provided with shut-off devices (19, 20) which are actuated by means of vacuum via control conduits (21, 22), caracterised in that said control conduits (21, 22) are respectively connected to one of the control chambers (23, 24, 25) of a control disk (26) of which control chambers one control chamber (23) is permanently connected to the vacuum source and the remaining control chambers (24, 25) are under atmospheric pressure, whereby said control disk (26) is rotatable via a gear (32), said gear being driven by the back and forward motion of the rod (1), whereby said control conduits (21, 22) are alternately connected to the control chamber (23) under vacuum or one of the control chambers (24, 25) under atmospheric pressure.

2. Pulsator according to claim 1, characterised in that the gear (32) is provided with a drive fork (31) pivotable about a centre of rotation (33), which drive fork is connected to an engaging piece (30) fastened to said rod (1) and which, at its centre of rotation, is connected to a drive disk (35) via a plane toothing (34) positively acting only in one direction of rotation, said drive disk (35) being connected to a control fork (37) via an eccentrically located engaging piece (36), which control fork (37) is, at its centre of rotation (38), connected to the control disk (26) via a plane toothing (39) positively acting only in one direction of rotation, whereby the toothing of said control disk (26) is interrupted at at least one point by a gap of tooth (44) and the control fork (37) has at least one tooth (45).

3. Pulsator according to claims 1 and 2, characterised in that the drive disk (35) is provided with an annular conduit (46) on its non-toothed side, said side being located on a plane surface (47) in the pulsator, which plane surface (47) is provided with a duct (48) which is linked to the vacuum source and connects up with the annular conduit (46).

4. Pulsator according to one of the claims 1 to 3, characterised in that the control chambers (23, 24, 25) are arranged on the non-toothed side of the control disk (26), the control disk (26) is arranged with said side on the plane surface (47) in which the control conduits (21, 22) and a duct (27) leading to the vacuum source are arranged in such a way that a control chamber (23) is permanently connected with the vacuum source and, depending on the position of the control disk (26), the control conduits (21, 22) are connected with said control chamber (23) or one of the other control chambers (24, 25).

5. Pulsator according to one of the claims 2 to 4, characterised in that the drive fork (31) and the control fork (37) are pressed against the drive disk (35) and control disk (26) respectively by springs (49, 50).

6. Pulsator according to one of the claims 1 to 5, characterised in that a release lever (40) is provided on the control disk (26), said lever (40) being connected with the control disk (26) via a toothing (41) positively acting only in one direction of rotation, whereby the release lever (40) is held in initial position by a spring element (42) and a stop (43) restricts the movement of the release lever (40).

**Revendications**

1. Pulsateur pour machines à traire avec deux membranes (2, 3) reliées l'une à l'autre par une barre (1), qui séparent chacune une boîte de pression (4, 5) dans un espace de travail (6,7) et un espace d'amortissement (8, 9), les espaces d'amortissement (8, 9) étant raccordés l'un à l'autre via un canal de jonction (11) pourvu d'un élément d'étranglement (10), tandis que les espaces de travail (6, 7) peuvent être reliés alternativement à une source de vide où á l'atmosphère, et avec un dispositif de renversement (12) raccordé à la barre (1) et permettant le raccordement alternatif des conduites (13, 14) menant aux chambres du pulsation des gobelets trayeurs avec l'atmosphère ou d'une conduite prinicipale (16) munie d'un élément d'étranglement (15) et menant à la source de vide, les élémets d'étranglement (10, 15) dans le canal de jonction (11) et dans la conduite principale (16) étant pontés par des conduites de bypass (17, 18) comportant des organes d'arrêt (19, 20) qui sont manœuvrables par dépression via les canaux de commande (21, 22), caractérisé en ce que les canaux de commande (21, 22) se trouvent chacun en relation avec une des chambres des commande (23, 24, 25) d'un disque de commande (26) dont l'une (23) est reliée en permanence à la source de vide, tandis que les autres chambres de commande (24, 25) se trouvent sous pression atmosphérique, le disque de commande (26) pouvant être mis en rotation via un engrenage (32) entraîné par le mouvement de va-et-vient de la barre (1) de manière à relier les canaux de commande (21, 22) alternativement à la chambre de commande sous vide (23) ou à l'une des chambres de commande sous pression atmosphérique (24, 25).

2. Pulsateur selon la revendication 1 caractérisé en ce que l'engrenage (32) est pourvu d'une fourche d'entraînement (31) pivotant autour d'un point d'appui (33) et reliée à un entraîneur (30) fixé à la barre (1) et qui, dans son point d'appui (33) est raccordée, via une denture plane (34) à engagement positif dans une seule direction à un disque d'entraînement (35) qui est reliée par un entraîneur (36) disposé de manière excentrique à une fourche de comande (37) qui, dans son point d'appui (38), est raccordée via une denture plane (39) à engagement positif dans une seule direction au disque de commande (26), le disque de commande (26) ayant au moins une interruption des dents (44) et la fourche de commande (37) ayant au moins une dent (45).

3. Pulsateur selon les revendications 1 et 2 caractérisé en ce que le disque d'entraînement (35) est pourvu d'un canal annulaire (46) sur son côté non denté, ce côté étant disposé dans le pulsateur sur une surface plane (47) qui est pourvue d'un canal (48) relié à la source de vide et débouchant dans le canal annulaire (46).

4. Pulsateur selon une des revendications 1 à 3 caractérisé en ce que les chambres de commande (23, 24, 25) sont disposées sur le côté non denté du disque de commande (26), ce côté étant disposé sur la surface plane (47) dans laquelle les canaux de commande (21, 22) ainsi qu'un canal (27) menant à la source de vide sont disposés de telle manière que la chambre de commande (23) se trouve en relation permanente avec la source de vide et que les canaux de commande (21,22) sont reliés à cette chambre de commande (23) ou bien à l'une des autres chambres de commande (24,25) selon la position du disque de commande (26).

5. Pulsateur selon une des revendications 2 à 4 caractérisé en ce que la fourche d'entraînement (31) et la fourche de commande (37) sont pressées par des ressorts (49, 50) contre le disque d'entraînement (35) ou le disque de commande (26) respectivement.

6. Pulsateur selon une des revendications 1 à 5 caractérisé en ce que le disque de commande (26) est pourvu d'un levier de démarrage (40) qui est relié, via une denture plane (41) à engagement positif dans une seule direction, au disque de commande (26), le levier de démarrage étant tenu dans la position de départ grâce à un élément élastique (42) et une butée (43) limitant la course utile du levier de démarrage (40).

Fig 1

Fig 3

Fig 5

Fig 4

Fig 2

Fig 7

Fig 6